# EUROPÄISCHE PATENTANMELDUNG

(11) **EP 4 400 328 A1**
(43) Veröffentlichungstag der Anmeldung: **17.07.2024**
(21) Anmeldenummer: 23213415.5
(22) Anmeldetag: 30.11.2023
(51) Int. Cl.: B60B 5/02, B60B 9/12, B60B 33/00, B29C 45/14, B29D 30/02

(54) **RAD EINER EINFACH- ODER DOPPELROLLE FÜR MÖBEL, KRANKENBETTEN ODER MEDIZINGERÄTE**

(30) Priorität: 13.01.2023 DE 102023100765
(71) Anmelder: Steinco Paul vom Stein GmbH, 42929 Wermelskirchen (DE)
(72) Erfinder: Weichbrodt, Tobias, 42929 Wermelskirchen (DE)
(74) Vertreter: Ostriga Sonnet Wirths & Vorwerk

(57) **Zusammenfassung**

Die vorliegende Erfindung betrifft ein Rad (10) für eine Einfach- oder Doppelrolle für Möbel, Krankenbetten oder Medizingeräte, bestehend aus einer Felge (12) und einem Reifen (11) sowie einem Radlager (13), welches zentral in der Felge angeordnet ist, wobei der Reifen die Felge mit einer Lauffläche (14) umgreift.

Die Aufgabe der Erfindung besteht darin, ein neues Rad einer Einfach- oder Doppelrolle für Möbel, Krankenbetten oder Medizingeräte zu schaffen, welches einfacher und mit kürzeren Zykluszeiten herstellbar ist und zugleich eine ausreichende Leitfähigkeit aufweist.

Die Aufgabe der Erfindung wird dadurch gelöst, dass an der Lauffläche des Reifens eine Mehrzahl von Speichen (15) stoffschlüssig angeordnet sind, die das Radlager zumindest kontaktieren.

## Beschreibung

Die Erfindung betrifft zunächst ein Rad einer Einfach- oder Doppelrolle für Möbel, Krankenbetten oder Medizingeräte, bestehend aus einer Felge und einem Reifen sowie einem Radlager, welches zentral in der Felge angeordnet ist und dass der Reifen mit einer Lauffläche die Felge umgreift.

Bei dem druckschriftlich nicht nachweisbaren Stand der Technik besteht das Rad insgesamt aus zwei Kunststoffkomponenten, wobei die härtere Kunststoffkomponente die Felge bildet und die weiche Komponente den Reifen.

Bei diesem Stand der Technik wird das Radlager zunächst von der härteren Kunststoffkomponente der Felge umspritzt. Danach wird der Reifen, der aus einer Lauffläche und einem Steg gebildet wird, welcher von der Lauffläche zum Radlager führt, in einem zweiten Spritzgussvorgang hergestellt. Zum Zwecke der Verbesserung der Leitfähigkeit des weicheren Reifenmaterials ist dieses mit Stahlfasern versetzt, die sich während des Spritzvorganges zumindest theoretisch gleichmäßig verteilen.

Bei dieser Art der Herstellung des Rades, bei der zunächst die Felge gespritzt wird und dann der Reifen, besteht jedoch der große Nachteil, dass die Zykluszeit relativ lang ist, weil die Abkühlung der Felge und des Reifens sehr viel Zeit benötigt.

Die Aufgabe der Erfindung besteht deshalb darin, ein neues Rad einer Einfach- oder Doppelrolle für Möbel, Krankenbetten oder Medizingeräte zu schaffen, welches einfacher und mit kürzeren Zykluszeiten herstellbar ist und zugleich eine ausreichende Leitfähigkeit aufweist.

Die Lösung der Aufgabe ergibt sich aus einem Rad einer Einfach- oder Doppelrolle für Möbel, Krankenbetten oder Medizingeräte, mit den Merkmalen des nachfolgenden Anspruchs 1:
Rad einer Einfach- oder Doppelrolle für Möbel, Krankenbetten oder Medizingeräte, bestehend aus einer Felge und einem Reifen sowie einem Radlager, welches zentral in der Felge angeordnet ist und dass der Reifen mit einer Lauffläche die Felge umgreift, dadurch gekennzeichnet, dass die Lauffläche des Reifens eine Mehrzahl von stoffschlüssig angeordneten Speichen aufweist, die das Radlager zumindest kontaktieren.

Das erfindungsgemäße Rad ermöglicht zunächst einmal geringere Zykluszeiten, da auf vorteilhafte Weise im ersten Schritt der erfindungsgemäße Reifen gespritzt werden kann, welcher schnell abkühlt, so dass auch der zweite Spritzgussvorgang zum Zwecke der Verringerung der Zykluszeit schnell erfolgen kann. Zugleich ist die Leitfähigkeit zwischen dem Laufreifen und dem Radlager relativ hoch, da zwischen der Mehrzahl der stoffschlüssig an der Lauffläche angeordneten Speichen und dem Radlager eine Vielzahl von Kontaktpunkten vorhanden sind.

Bei einer vorteilhaften Ausführungsform der Erfindung sind die Speichen mit einem inneren Ring verbunden, der das Radlager wenigstens teilweise umgreift. Diese Ausführungsform weist zum einen den Vorteil auf, dass das Radlager in dem inneren Ring des Reifens auch vor dem zweiten Spritzgussvorgang sicher positioniert ist und darüber hinaus andererseits eine große Kontaktfläche zwischen dem Radlager und dem Reifen vorhanden ist.

Eine weitere vorteilhafte Ausführungsform der Erfindung ist dadurch gekennzeichnet, dass der Reifen im Bereich jeder Speiche jeweils mindestens eine beidseitige Verdickung als Haltepunkt für die Speiche während der Herstellung der Felge aufweist.

Letztlich können dem Reifenmaterial Zusätze zur Verbesserung der Leitfähigkeit vom Radlager zur Lauffläche zugeordnet sein.

Des Weiteren bezieht sich die Erfindung auch auf ein Verfahren zur Herstellung eines Rades einer Einfach- oder Doppelrolle für Möbel, Krankenbetten od. dgl., bestehend aus Reifen, Felge und Radlager, bei dem zunächst der Reifen und dann die Felge gespritzt wird.

Ausgehend von dem oben genannten druckschriftlich nicht nachweisbaren Stand der Technik und der dort ebenfalls aufgeführten Aufgabe, ergibt sich die Lösung der Aufgabe durch ein Verfahren mit den nachfolgenden Merkmalen des Anspruchs 5:
Verfahren zur Herstellung eines Rades einer Einfach- oder Doppelrolle für Möbel, Krankenbetten od. dgl., bestehend aus Reifen, Felge und Radlager, bei dem zunächst der Reifen und dann die Felge gespritzt wird, gekennzeichnet durch folgende Herstellungsschritte:
- Einlage eines Radlagers in die Kavität einer Kunststoffspritzgussform zum Zwecke der Durchführung eines ersten Spritzgussvorgangs,
- Durchführung des ersten Spritzgussvorganges zur Herstellung eines Reifens mit Lauffläche und einer Mehrzahl von Speichen, die das Radlager kontaktieren,
- Abkühlen des hergestellten Reifens,
- Entnahme des Reifens mittels einer an die Form des Reifens angepassten Transportvorrichtung,
- Transport des Reifens in eine Kavität einer weiteren Kunststoffspritzgussform zum Zwecke der Durchführung eines zweiten Spritzgussvorgangs,
- Durchführen des zweiten Spritzgussvorgangs zur Herstellung der Felge,
- Abkühlen des hergestellten Rades und Entnahme aus der zweiten Kunststoffspritzgussform.

Das erfindungsgemäße Verfahren weist den wesentlichen Vorteil auf, dass die Zykluszeit zur Herstellung eines solchen Rades deutlich verringert worden ist.

Die verringerte Zykluszeit liegt einerseits an einer verringerten Zeit zur Befüllung der Kunststoffspritzgussform über die Mehrzahl der Speichen und andererseits daran, dass der Reifen, der aus Lauffläche und der Mehrzahl von Speichen besteht, sich relativ schnell soweit abkühlt, dass er im Hinblick auf den zweiten Spritzgussvorgang transportfähig ist.

Der Vorteil dieses Verfahrens ergibt sich daraus, dass der in dem ersten Spritzgussvorgang erstellte Reifen nach dem Spritzvorgang sofort über alle seine Oberflächen abkühlen kann, während er beim Stand der Technik großflächig an der zuvor hergestellten, noch warmen Felge anliegt.

Auch wird eine gute Leitfähigkeit zwischen der Lauffläche und dem Radlager erzielt.

Nach einer vorteilhaften Ausführungsform der Erfindung erfolgt die Herstellung des Reifens in der ersten Kunststoffspritzgussform mittels einer Vielzahl von Anspritzpunkten am Rande des eingelegten Radladers, wodurch sich die Zeit zur Befüllung der Kunststoffspritzgussform weiter verringert.

Letztlich bezieht sich die Erfindung auch auf eine Kunststoffspritzgussform für die Herstellung eines Reifens einer Einfach- oder Doppelrolle für Möbel und Krankenbetten mit zumindest einer Kavität für eine Lauffläche eines Reifens.

Wiederum ausgehend von dem oben beschriebenen Stand der Technik, den diesbezüglichen Nachteilen sowie der Aufgabe, ergibt sich die Lösung der Aufgabe durch eine Kunststoffspritzgussform gemäß den nachfolgenden Merkmalen des Anspruchs 7:
Kunststoffspritzgussform für die Herstellung eines Reifens einer Einfach- oder einer Doppelrolle für Möbel, Krankenbetten oder
Medizingeräte, mit zumindest einer Kavität für eine Lauffläche eines Reifen, dadurch gekennzeichnet, dass die Kavität zusätzlich Bereiche zur Herstellung einer Vielzahl von Speichen aufweist.

Die erfindungsgemäße Kunststoffspritzgussform weist den wesentlichen Vorteil auf, dass man mit ihr auf vorteilhafte Weise ziemlich schnell, also mit einer geringen Zykluszeit, einen Reifen herstellen kann, der nach einer geringen Abkühlzeit - wie oben bereits dargelegt - in eine weitere Kunststoffspritzgussform zum Herstellen der Felge bzw. des endgültigen Rades transportiert werden kann.

Auf vorteilhafte Weise kann eine derartige Kunststoffspritzgussform so ausgestaltet sein, dass sich die auf die Herstellung der Speichen beziehenden Teilkavitäten mit einer zur Herstellung des teilweise das Radlager umgreifenden Ringes dienenden, weiteren Teilkavität verbunden sind.

Weitere Vorteile der Erfindung ergeben sich aus der nachfolgenden Beschreibung eines Ausführungsbeispiels. Es zeigen:
- Fig. 1: eine perspektivische Ansicht eines Reifens mit Radlager,
- Fig. 2: eine Draufsicht auf das Radlager,
- Fig. 3: eine Draufsicht auf den Reifen und das Radlager,
- Fig. 4: eine Draufsicht auf ein Rad mit Felge, Reifen und Radlager von der ersten Seite,
- Fig. 5: eine Draufsicht auf ein Rad mit Felge, Reifen und Radlager von der zweiten Seite,
- Fig. 6: eine Schnittdarstellung des Rades gemäß Schnittlinie VI/VI in Fig. 4
- Fig. 7 bis 12: Darstellung des Spritzgussvorganges zur Erstellung des Reifens in verschiedenen Schritten

In den Zeichnungen ist ein Rad insgesamt mit der Bezugsziffer 10 gekennzeichnet. Das Rad 10 wird durch einen Reifen 11, eine Felge 12 sowie ein Radlager 13 gebildet. Während die Felge 12 aus einer härteren Kunststoffkomponente besteht, wird der Reifen aus einer weichen Kunststoffkomponente mit einem Zusatz an nicht dargestellten Stahlfasern gebildet.

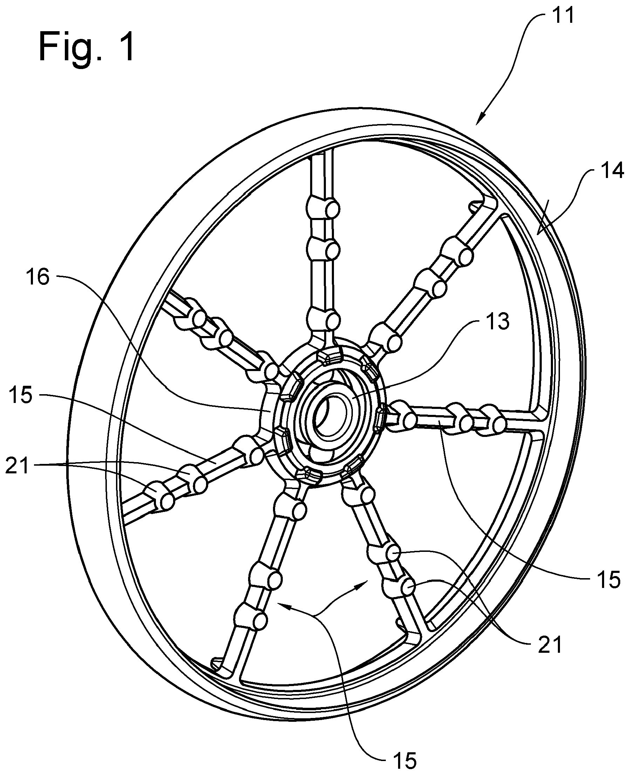

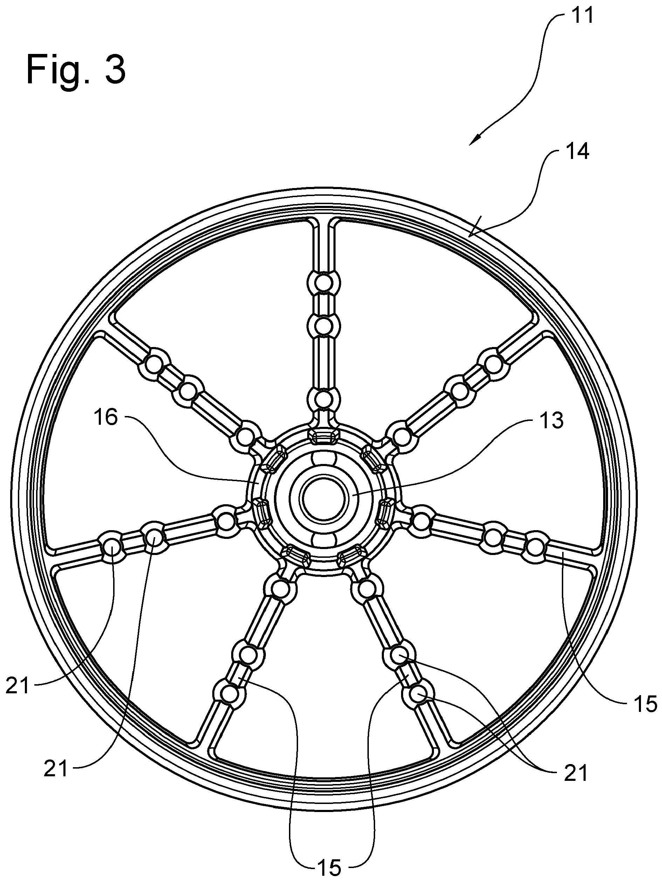

In den Fig. 1 und 3 ist jeweils ein Reifen 11, bestehend aus der Lauffläche 14, sieben Speichen 15 und einem inneren Ring 16, dargestellt, der zur Anordnung des Radlagers 13 dient.

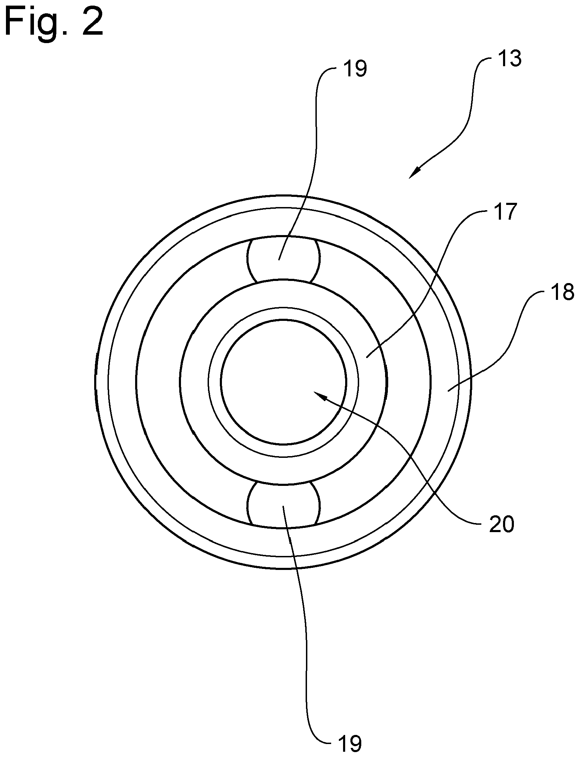

Insbesondere in der Fig. 2 erkennt man, dass das Radlager 13 aus einer inneren und äußeren Lagerschale 17 und 18 sowie Kugeln 19 und einer Achsaufnahme 20 gebildet wird.

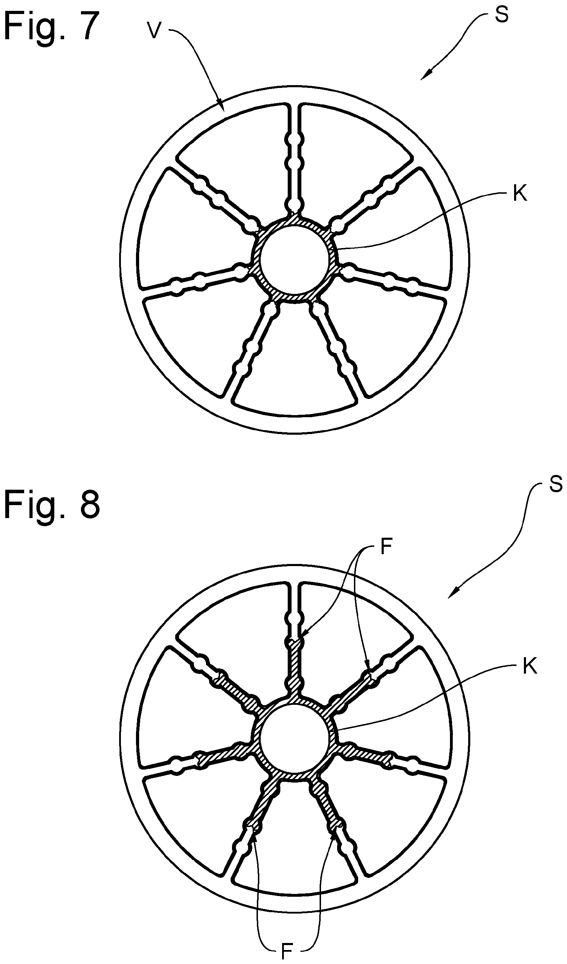

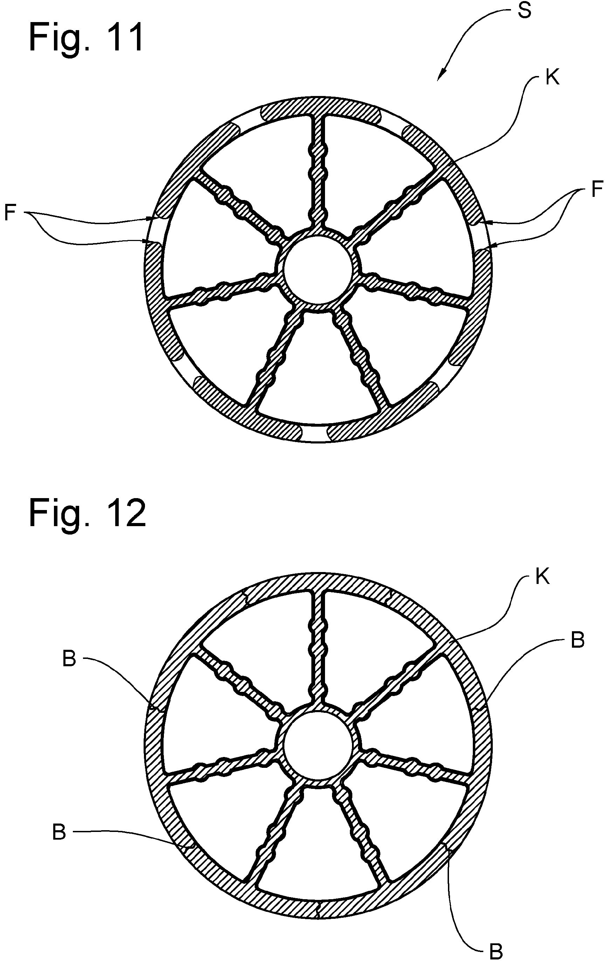

Der Reifen 11 wird in seiner oben beschriebenen Ausgestaltung in einer ersten Kunststoffspritzgussform S (s. Fig. 7 bis 12) hergestellt, wobei in die Form zunächst das Radlager 13 eingelegt wird. Nach der Beendigung des Spritzgussvorganges findet eine gewisse Abkühlung statt, bis der Reifen 11 aus der Kunststoffspritzgussform S entnommen und in eine zweite, nicht dargestellte Kunststoffspritzgussform zur Erstellung der Felge 12 und damit des Rades 10 insgesamt eingelegt werden kann.

Im Zusammenhang mit der Erstellung der Felge 12 in der zweiten Kunststoffspritzgussform sind an den Speichen 15 vorhandene beidseitige Querschnittsveränderungen 21 von Bedeutung, welche als Haltepunkte für die Speichen 15 während der Herstellung der Felge 12 dienen. Durch diese Verdickungen oder Vertiefungen 21 wird in einer Speiche 15 erreicht, dass auch nach dem Umspritzen der Speichen 15 diese geradlinig in der Felge 12 angeordnet sind.

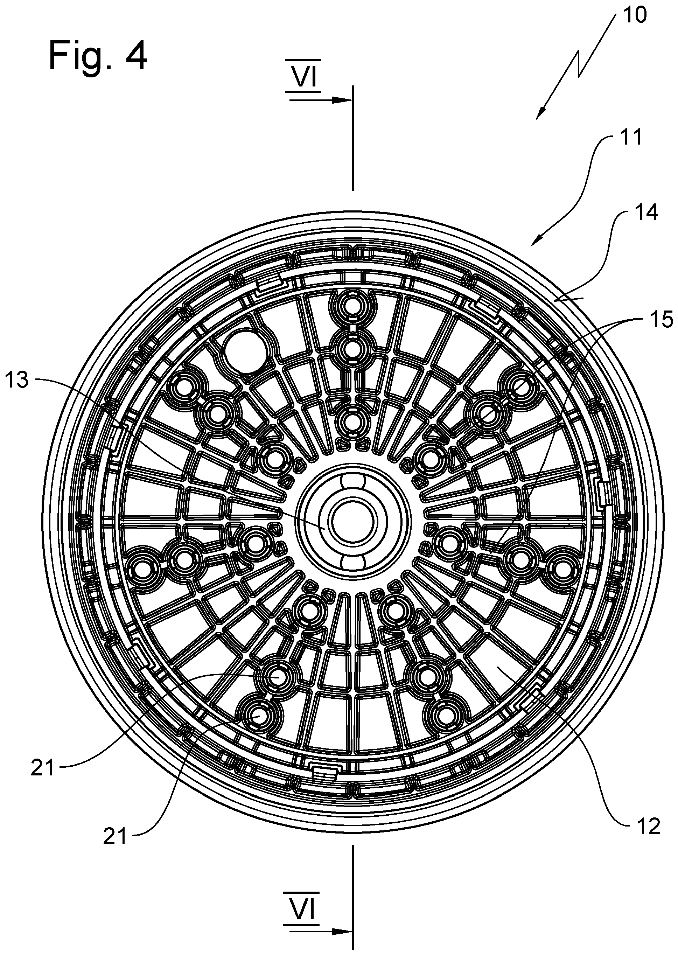

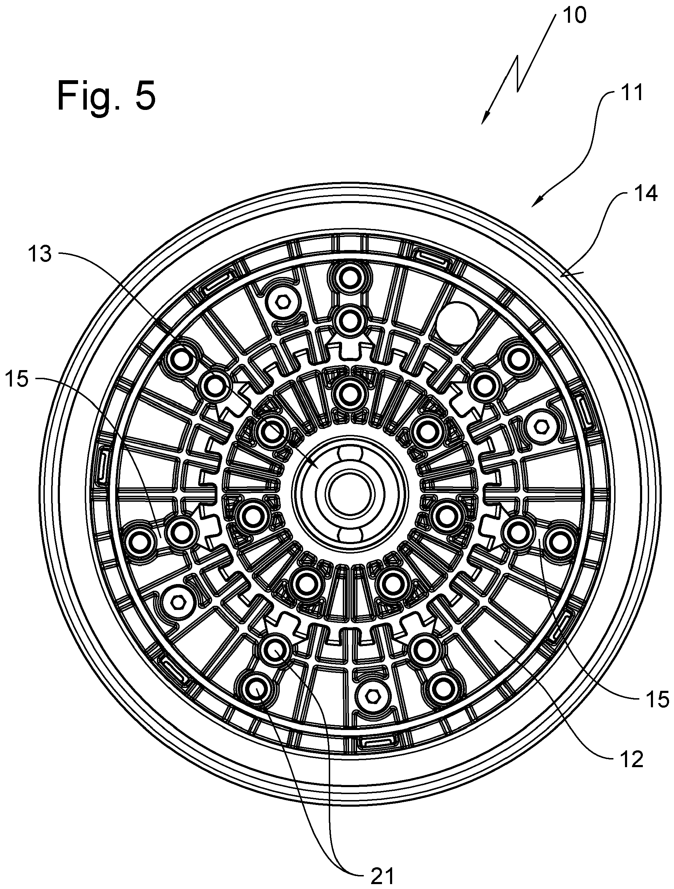

Die Fig. 4 und 5 zeigen in der Draufsicht die beiden Seitenansichten des fertiggestellten Rades 10, bestehend aus Reifen 11, Felge 12 und Radlager 13. Man erkennt, dass außen um die Felge 12 die Lauffläche 14 verläuft und dass die Speichen 15 bis auf die Stirnflächen der Verdickungen 21 umspritzt worden sind. Letztlich ist durch den Spritzvorgang der Felge 12 das Radlager 13 fest im Rad 10 angeordnet.

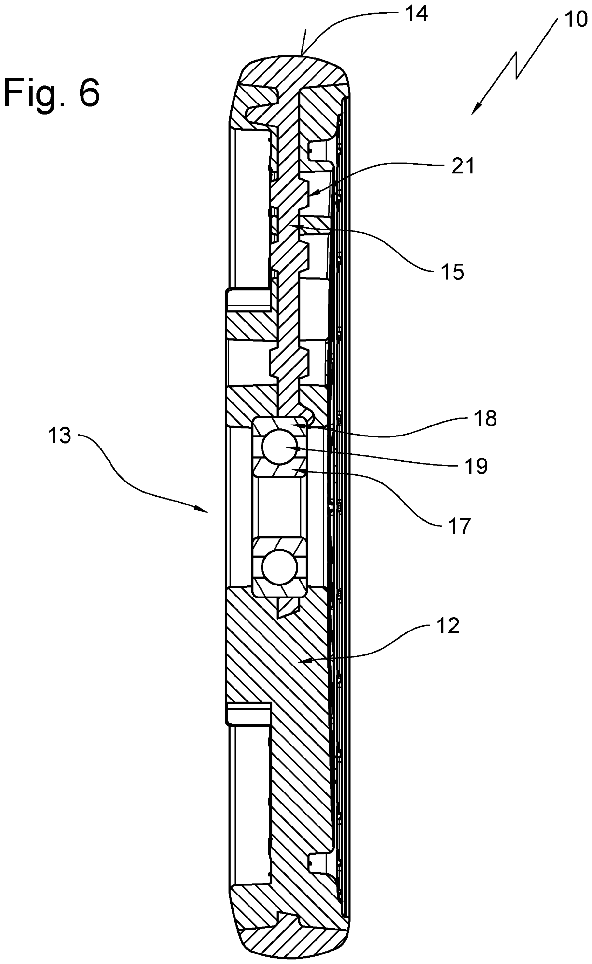

Die Fig. 6 zeigt ergänzend einen mittigen Schnitt durch das Rad 10 gemäß den Schnittlinien VI/VI in Fig. 4.

In den Fig. 7 bis 12 ist der erste Spritzgussvorgang zur Erstellung des Reifens 11 in verschiedenen Schritten in Form der Draufsicht auf die jeweils schematisch gezeichnete Kunststoffspritzgussform S dargestellt.

Ausgehend von einem oder mehreren Anspritzpunkten füllt sich eine Kavität V der dargestellten Kunststoffspritzgussform S zunächst im Bereich des inneren Ringes 16 (s. Fig. 7), wobei sich dann gleichmäßig Fließfronten F des flüssigen Kunststoffes K durch die Speichen 15 hindurch (s. Fig. 8) nach außen bewegen.

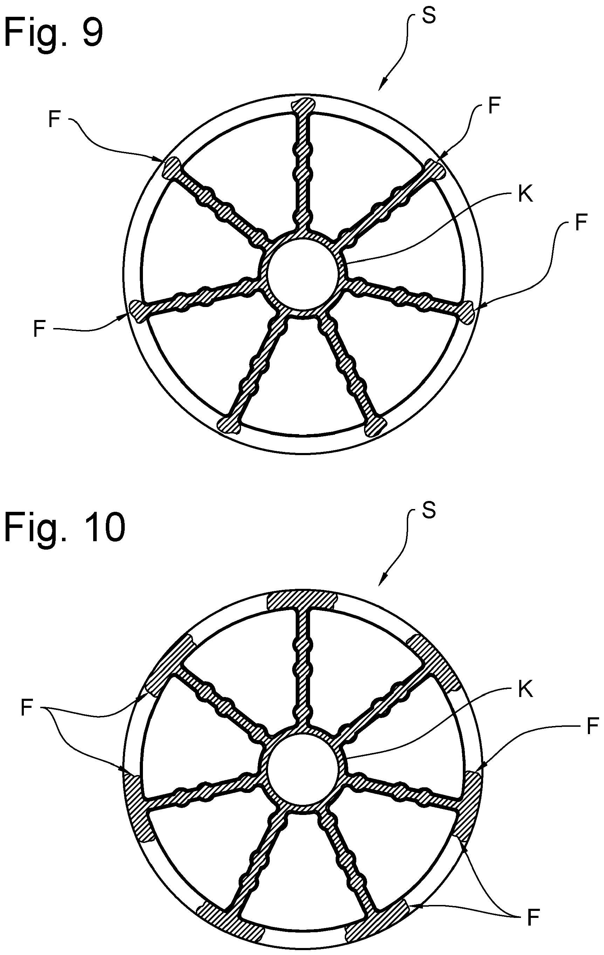

In den Fig. 9 bis 12 ist dann ausgehend von jeder Speiche 15 die beidseitige Ausdehnung zweier Fließfronten F des flüssigen Kunststoffs K im Bereich der Kavität V für die Lauffläche 14 zu erkennen, so dass im Endeffekt im Bereich der Lauffläche 14 nach Beendigung des Spritzgussvorganges sieben Fließfronten F des flüssigen Kunststoffes K aufeinandertreffen und dort sogenannte Bindenähte B ausbilden.

Grundsätzlich hat man festgestellt, dass im Bereich der Bindenähte B sich die zugesetzten, nicht dargestellten Stahlfasern radial orientieren, so dass in diesen Bereichen die Lauffläche 14 eine höhere Leitfähigkeit aufweist.

### Bezugszeichenliste

- 10: Rad
- 11: Reifen
- 12: Felge
- 13: Radlager
- 14: Lauffläche
- 15: Speichen
- 16: innerer Ring
- 17: innere Lagerschale
- 18: äußere Lagerschale
- 19: Kugeln
- 20: Achsaufnahme
- 21: Querschnittsveränderungen in 15

- V: Kavität
- S: Kunststoffspritzgussform
- F: Fließfronten
- B: Bindenähte
- K: flüssiger Kunststoff

## Patentansprüche

1. Rad (10) einer Einfach- oder Doppelrolle für Möbel, Krankenbetten oder Medizingeräte, bestehend aus einer Felge (12) und einem Reifen (11) sowie einem Radlager (13), welches zentral in der Felge (12) angeordnet ist und dass der Reifen (11) mit einer Lauffläche (14) die Felge (12) umgreift, **dadurch gekennzeichnet, dass** die Lauffläche (14) des Reifens (11) eine Mehrzahl von stoffschlüssig angeordneten Speichen (15) aufweist, die das Radlager (13) zumindest kontaktieren.

2. Rad (10) nach Anspruch 1, **dadurch gekennzeichnet, dass** die Speichen (15) mit einem inneren Ring (16) verbunden sind, der das Radlager (13) wenigstens teilweise umgreift.

3. Rad (10) nach Anspruch 1 oder 2, **dadurch gekennzeichnet, dass** der Reifen (11) im Bereich jeder Speiche jeweils mindestens eine beidseitige Querschnittsveränderung als Haltepunkt für die Speiche während der Herstellung der Felge (12) aufweist.

4. Rad (10) nach Anspruch 1 oder 2, **dadurch gekennzeichnet, dass** das Reifenmaterial Zusätze zur Verbesserung der Leitfähigkeit von Radlager (13) und Lauffläche (14) aufweist.

5. Verfahren zur Herstellung eines Rades (10) einer Einfach- oder Doppelrolle für Möbel, Krankenbetten od. dgl., bestehend aus Reifen (11), Felge (12) und Radlager (13), bei dem zunächst der Reifen (11) und dann die Felge (12) gespritzt wird, **gekennzeichnet durch** folgende Herstellungsschritte:
- Einlage eines Radlagers (13) in die Kavität (V) einer Kunststoffspritzgussform (S) zum Zwecke der Durchführung eines ersten Spritzgussvorgangs,
- Durchführung des ersten Spritzgussvorganges zur Herstellung eines Reifens (11) mit Lauffläche (14) und einer Mehrzahl von Speichen (15), die das Radlager (13) zumindest kontaktieren,
- Abkühlen des hergestellten Reifens (11),
- Entnahme des Reifens (11) mittels einer an die Form des Reifens (11) angepassten Transportvorrichtung,
- Transport des Reifens (11) in eine Kavität (V) einer weiteren Kunststoffspritzgussform (S) zum Zwecke der Durchführung eines zweiten Spritzgussvorgangs,
- Durchführen des zweiten Spritzgussvorgangs zur Herstellung der Felge (12),
- Abkühlen des hergestellten Rades (10) und Entnahme aus der zweiten Kunststoffspritzgussform (S).

6. Verfahren nach Anspruch 5, **gekennzeichnet dadurch, dass** die Herstellung des Reifens (11) in der ersten Kunststoffspritzgussform (S) mittels einer Vielzahl von Anspritzpunkten am Rande des eingelegten Radlagers (13) erfolgt.

7. Kunststoffspritzgussform (S) für die Herstellung eines Reifens (11) einer Einfach- oder einer Doppelrolle für Möbel, Krankenbetten oder Medizingeräte, mit zumindest einer Kavität (V) für eine Lauffläche (14) eines Reifens (11), **dadurch gekennzeichnet, dass** die Kavität (V) zusätzlich Bereiche zur Herstellung einer Vielzahl von Speichen (15) aufweist.

8. Kunststoffspritzgussform (S) nach Anspruch 7, **dadurch gekennzeichnet, dass** die sich auf die Herstellung der Speichen (15) beziehenden Teilkavitäten (V) mit einer zur Herstellung des teilweise das Radlager (13) umgreifenden Ringes dienenden, weiteren Teilkavität (V) verbunden sind.
